# FASCICULE DE BREVET EUROPEEN

(11) **EP 3 645 338 B1**
(45) Date de publication et mention de la délivrance du brevet: **08.12.2021**
(21) Numéro de dépôt: 18749840.7
(22) Date de dépôt: 28.06.2018
(51) Int. Cl.: B60N 2/874, B60N 2/90

(54) **APPUI-TÊTE DE SIÈGE DE VÉHICULE AUTOMOBILE**
KOPFSTÜTZE FÜR EINEN KRAFTFAHRZEUGSITZ
HEADREST FOR A MOTOR VEHICLE SEAT

(30) Priorité: 29.06.2017 FR 1756012; 26.04.2018 FR 1853697
(43) Date de publication de la demande: 06.05.2020
(73) Titulaire: TESCA France, 75008 Paris (FR)
(72) Inventeur: SOY, Albert, 17170 Amer (ES)
(74) Mandataire: Sayettat, Julien Christian
(86) Numéro de dépôt international: PCT/FR2018/051603
(87) Numéro de publication internationale: WO 2019/002785

(56) Documents cités:
- DE-A1- 10 335 517
- FR-A1- 2 910 406
- FR-A1- 3 000 923

## Description

L'invention concerne un appui-tête de siège de véhicule automobile.

Il est connu dans le document FR-A-3 000 923 de réaliser un appui-tête de siège de véhicule automobile, ledit appui-tête comprenant :
- deux branches métalliques parallèles de montage sur un dossier dudit siège,
- une entretoise transversale reliant les parties supérieures desdites branches,
- un boitier en matériau plastique moulé d'absorption d'énergie en cas de choc de la tête d'un passager sur ledit appui-tête, ledit boitier étant monté rotatif autour d'un axe transversal, de manière à pouvoir passer d'une position relevée d'utilisation à une position rabattue d'escamotage,
- un coussin de garnissage dudit boitier,
- un dispositif de verrouillage dudit boitier en position relevée,
- un premier moyen ressort d'actionnement dudit boitier vers sa position rabattue quand ledit dispositif est désactivé.

Le fait de pouvoir amener le boitier en position rabattue permet notamment de libérer la vision vers l'arrière quand le siège correspondant n'est pas occupé, et éventuellement, lorsque l'on réalise une position rabattue vers l'avant, de créer une gêne obligeant l'occupant à placer le boitier en position d'utilisation.

Divers agencements ont été proposés, mais ils requièrent généralement une grande multiplicité d'éléments, le dispositif de verrouillage requérant l'adjonction de composants spécifiques associés aux branches ou à l'entretoise.

Ils présentent alors souvent un poids, un coût et un encombrement importants. L'invention a pour but de pallier ces inconvénients.

A cet effet, l'invention propose un appui-tête de siège de véhicule automobile, ledit appui-tête comprenant :
- deux branches métalliques parallèles de montage sur un dossier dudit siège,
- une entretoise transversale reliant les parties supérieures desdites branches,
- un boitier en matériau plastique moulé d'absorption d'énergie en cas de choc de la tête d'un passager sur ledit appui-tête, ledit boitier étant monté rotatif autour d'un axe transversal, de manière à pouvoir passer d'une position relevée d'utilisation à une position rabattue d'escamotage,
- un coussin de garnissage dudit boitier,
- un dispositif de verrouillage dudit boitier en position relevée,
- un premier moyen ressort d'actionnement dudit boitier vers sa position rabattue quand ledit dispositif est désactivé,
ledit dispositif comprenant :
- deux crans de verrouillage réalisés chacun en partie supérieure de chacune desdites branches,
- une traverse de verrouillage montée en coulissement transversal dans ledit boitier, de manière à pouvoir passer d'une position de verrouillage à une position de déverrouillage, ladite traverse étant pourvue de deux saillies de verrouillage s'insérant respectivement dans chacun desdits crans quand ladite traverse est en position de verrouillage,
- un moyen d'actionnement de ladite traverse vers sa position de déverrouillage,
- un deuxième moyen ressort d'actionnement de ladite traverse vers sa position de verrouillage quand ledit boitier est en position relevée et quand ledit moyen d'actionnement n'est pas activé.

Dans cette description, les termes de positionnement dans l'espace (supérieur, transversal, latéral, avant,...) sont pris en référence à l'appui-tête disposé en situation d'utilisation dans le véhicule.

Avec l'agencement proposé, on ne met pas en jeu des composants spécifiques associés aux branches ou à l'entretoise pour réaliser le dispositif de verrouillage, sachant qu'on se contente de réaliser des crans de verrouillage sur lesdites branches.

Il en résulte une diminution du poids, du coût et de l'encombrement de l'appui-tête.

On notera en outre que le fait de disposer de deux crans de verrouillage disposés latéralement permet un parfait verrouillage du boitier.

D'autres particularités et avantages de l'invention apparaîtront dans la description qui suit, faite en référence aux figures jointes, dans lesquelles :
- la figure 1 est une vue schématique partielle en perspective d'un appui-tête selon une réalisation, le boitier étant en position relevée,
- la figure 2 est analogue à la figure 1, en vue selon un autre angle, le boitier étant en position rabattue,
- la figure 3 est une vue schématique partielle en perspective de l'appui-tête des figures précédentes présentant l'intérieur du boitier,
- la figure 4 est une vue en perspective partielle éclatée de l'appui-tête des figures précédentes,
- la figure 5 est une vue de détail en perspective partielle de l'appui-tête des figures précédentes, le boitier étant en cours d'actionnement d'une de ses positions à l'autre ;
- la figure 6 est une vue schématique partielle en perspective d'un appui-tête selon une autre réalisation, la traverse étant en position de verrouillage.

En référence aux figures, on décrit un appui-tête 1 de siège de véhicule automobile, ledit appui-tête comprenant :
- deux branches 2 métalliques ― notamment tubulaires ― parallèles de montage sur un dossier dudit siège,
- une entretoise 3 ― notamment métallique, notamment tubulaire ― transversale reliant les parties supérieures 10 desdites branches ― ladite entretoise pouvant être fixée par soudure, comme représenté ici, ou encore par emboitement, ou bien être d'un bloc avec lesdites branches -,
- un boitier 4 ― ici en deux parties ― en matériau plastique moulé d'absorption d'énergie en cas de choc de la tête d'un passager sur ledit appui-tête, ledit boitier étant monté rotatif autour d'un axe transversal 15 ― ici autour de ladite entretoise -, de manière à pouvoir passer d'une position relevée d'utilisation à une position rabattue, ici vers l'avant, d'escamotage,
- un coussin de garnissage dudit boitier,
- un dispositif de verrouillage dudit boitier en position relevée,
- un premier moyen ressort 5 d'actionnement dudit boitier vers sa position rabattue quand ledit dispositif est désactivé,
ledit dispositif comprenant :
- deux crans 6 de verrouillage réalisés chacun en partie supérieure 10 de chacune desdites branches,
- une traverse 7 de verrouillage montée en coulissement transversal dans ledit boitier, de manière à pouvoir passer d'une position de verrouillage à une position de déverrouillage, ladite traverse étant pourvue de deux saillies 8 de verrouillage s'insérant respectivement dans chacun desdits crans quand ladite traverse est en position de verrouillage,
- un moyen d'actionnement de ladite traverse vers sa position de déverrouillage,
- un deuxième moyen ressort 16 d'actionnement de ladite traverse vers sa position de verrouillage quand ledit boitier est en position relevée et quand ledit moyen d'actionnement n'est pas activé.

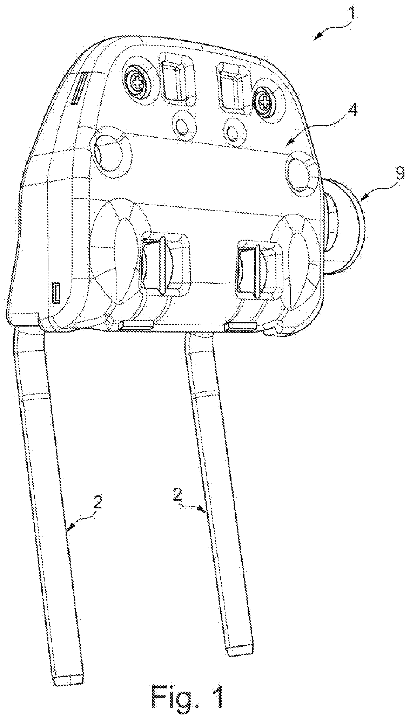

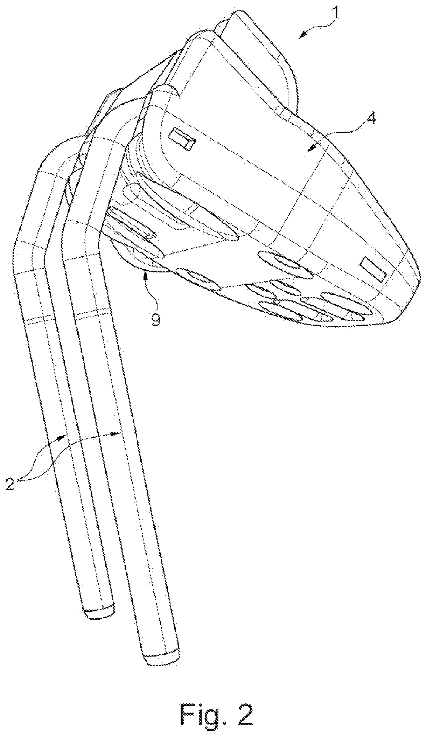

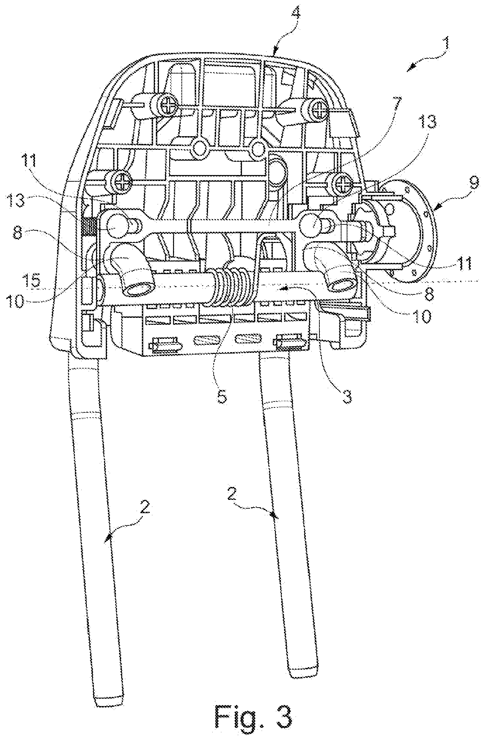

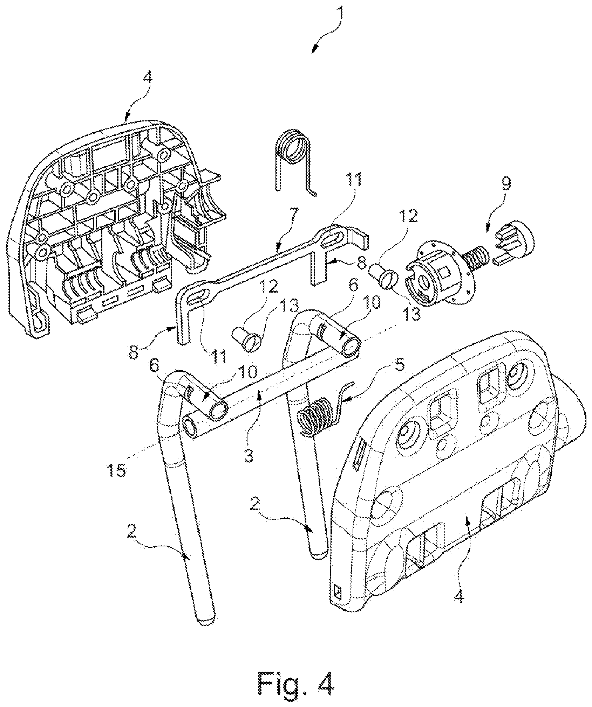

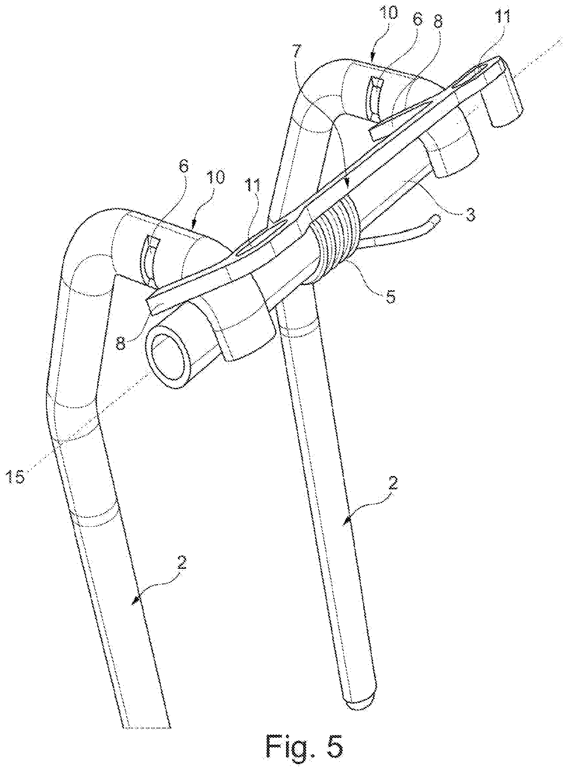

Selon la réalisation représentée en figures 1 à 5, le moyen d'actionnement de la traverse 7 est sous forme d'un bouton 9 latéral disposé en extrémité de ladite traverse de manière à permettre son activation par actionnement vers sa position de déverrouillage.

Selon la réalisation représentée en figures 1 à 5, le bouton 9 est actionné par poussée exercée par un doigt d'utilisateur.

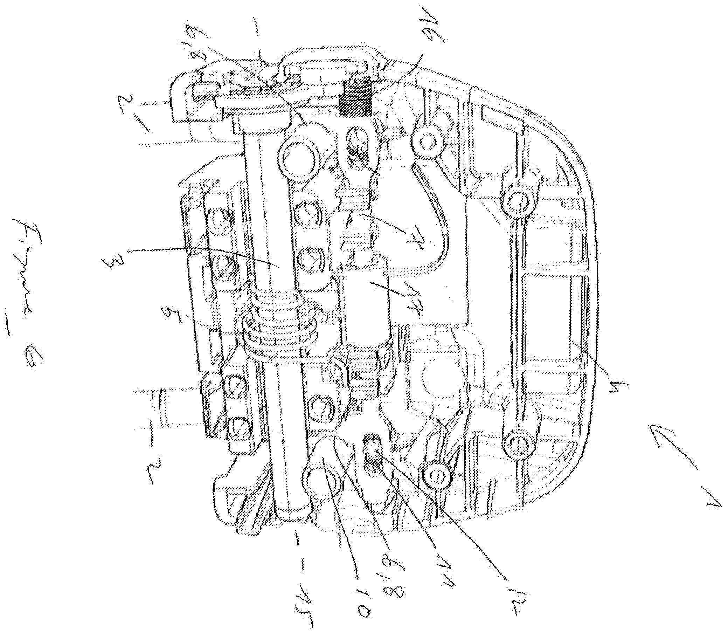

Selon la réalisation représentée en figure 6, le moyen d'actionnement de la traverse 7 est sous forme d'un solénoïde 17, sachant que :
- ledit solénoïde est monté dans le boitier 4,
- ladite traverse est à base de métal attirable par un aimant,
- ladite traverse est montée de manière à traverser l'intérieur dudit solénoïde et à pouvoir coulisser dedans,
- les bornes d'alimentation électrique dudit solénoïde sont définies de sorte que ladite traverse adopte :
   ∘ sa position de verrouillage en l'absence d'alimentation sous l'effet du deuxième moyen ressort 16,
   ∘ sa position de déverrouillage en présence d'alimentation, à l'encontre dudit deuxième moyen ressort.

On rappelle ici qu'un solénoïde est une bobine allongée constituée par un fil conducteur enroulé qui crée sur son axe un champ magnétique quand il est parcouru par un courant.

Un tel agencement permet :
- d'éviter une multiplication des composants puisque le solénoïde 17 est couplé directement à la traverse 7 le traversant, par attraction magnétique, sans intervention de composant intermédiaire tel qu'une bielle,
- gagner de l'espace à l'intérieur du boitier 4.

Selon les réalisations représentées, les branches 2 présentent une partie supérieure 10 recourbée vers l'avant.

Selon les réalisations représentées, les crans 6 sont disposés latéralement sur les branches 2, les saillies 8 étant orientées verticalement.

Selon les réalisations représentées, la traverse 7 s'inscrit sensiblement dans une plaque plane, ladite traverse comprenant deux lumières 11 latérales allongées transversalement, lesdites lumières étant traversées par deux tiges 12 de fixation - par exemple issues de vis ou de rivets - au boitier 4, lesdites tiges étant pourvues en leur extrémité libre d'une collerette 13 de maintien de ladite traverse, lesdites lumières étant agencées de manière à permettre un débattement transversal de ladite traverse entre ses positions de verrouillage et de déverrouillage.

En variante non représentée, les tiges 12 peuvent être issues de moulage du boitier 4, les extrémités libres desdites tiges s'emboitant dans des logements prévus dans un cache monté en arrière dudit boitier, de manière à maintenir en place la traverse 7 pour son coulissement transversal.

Selon les réalisations représentées, le premier moyen ressort 5 est sous forme d'un ressort en hélice monté autour de l'entretoise 3.

De façon non représentée, il peut être prévu que les crans 6 présentent un élargissement latéral de manière à faciliter, par « effet d'entonnoir », l'insertion des saillies 8 lors de la mise de la traverse 7 en position de verrouillage.

Un tel agencement permet de remédier à d'éventuelles dispersions dimensionnelles qui feraient qu'une des saillies 8 ne se positionne pas parfaitement en regard du cran 6 correspondant alors que l'autre desdites saillies est bien positionnée.

De manière alternative, ou encore cumulée, il peut être prévu que les saillies 8 soient amincies latéralement, de manière à présenter une section effilée permettant de faciliter leur insertion dans les crans 6.

## Revendications

1. Appui-tête (1) de siège de véhicule automobile, ledit appui-tête comprenant :
• deux branches (2) métalliques parallèles de montage sur un dossier dudit siège,
• une entretoise (3) transversale reliant les parties supérieures (10) desdites branches,
• un boitier (4) en matériau plastique moulé d'absorption d'énergie en cas de choc de la tête d'un passager sur ledit appui-tête, ledit boitier étant monté rotatif autour d'un axe transversal (15), de manière à pouvoir passer d'une position relevée d'utilisation à une position rabattue d'escamotage,
• un coussin de garnissage dudit boitier,
• un dispositif de verrouillage dudit boitier en position relevée,
• un premier moyen ressort (5) d'actionnement dudit boitier vers sa position rabattue quand ledit dispositif est désactivé,
ledit appui-tête étant **caractérisé en ce que** ledit dispositif comprend :
• deux crans (6) de verrouillage réalisés chacun en partie supérieure (10) de chacune desdites branches,
• une traverse (7) de verrouillage montée en coulissement transversal dans ledit boitier, de manière à pouvoir passer d'une position de verrouillage à une position de déverrouillage, ladite traverse étant pourvue de deux saillies (8) de verrouillage s'insérant respectivement dans chacun desdits crans quand ladite traverse est en position de verrouillage,
• un moyen d'actionnement de ladite traverse vers sa position de déverrouillage,
• un deuxième moyen ressort (16) d'actionnement de ladite traverse vers sa position de verrouillage quand ledit boitier est en position relevée et quand ledit moyen d'actionnement n'est pas activé.

2. Appui-tête selon la revendication 1, **caractérisé en ce que** le moyen d'actionnement de la traverse (7) est sous forme d'un bouton (9) latéral disposé en extrémité de ladite traverse de manière à permettre son actionnement vers sa position de déverrouillage.

3. Appui-tête selon la revendication 2, **caractérisé en ce que** le bouton (9) est actionné par poussée exercée par un doigt d'utilisateur.

4. Appui-tête selon la revendication 1, **caractérisé en ce que** le moyen d'actionnement de la traverse (7) est sous forme d'un solénoïde (17), sachant que :
• ledit solénoïde est monté dans le boitier (4),
• ladite traverse est à base de métal attirable par un aimant,
• ladite traverse est montée de manière à traverser l'intérieur dudit solénoïde et à pouvoir coulisser dedans,
• les bornes d'alimentation électrique dudit solénoïde sont définies de sorte que ladite traverse adopte :
∘ sa position de verrouillage en l'absence d'alimentation sous l'effet du deuxième moyen ressort (16),
∘ sa position de déverrouillage en présence d'alimentation, à l'encontre dudit deuxième moyen ressort.

5. Appui-tête selon l'une quelconque des revendications 1 à 4, **caractérisé en ce que** les branches (2) présentent une partie supérieure (10) recourbée vers l'avant.

6. Appui-tête selon l'une quelconque des revendications 1 à 5, **caractérisé en ce que** les crans (6) sont disposés latéralement sur les branches (2), les saillies (8) étant orientées verticalement.

7. Appui-tête selon l'une quelconque des revendications 1 à 6, **caractérisé en ce que** la traverse (7) s'inscrit sensiblement dans une plaque plane, ladite traverse comprenant deux lumières (11) latérales allongées transversalement, lesdites lumières étant traversées par deux tiges (12) de fixation au boitier (4), lesdites tiges étant pourvues en leur extrémité libre d'une collerette (13) de maintien de ladite traverse, lesdites lumières étant agencées de manière à permettre un débattement transversal de ladite traverse entre ses positions de verrouillage et de déverrouillage.

8. Appui-tête selon l'une quelconque des revendications 1 à 7, **caractérisé en ce que** le premier moyen ressort (5) est sous forme d'un ressort en hélice monté autour de l'entretoise (3).

9. Appui-tête selon l'une quelconque des revendications 1 à 8, **caractérisé en ce que** les crans (6) présentent un élargissement latéral de manière à faciliter l'insertion des saillies (8) lors de la mise de la traverse (7) en position de verrouillage.

10. Appui-tête selon l'une quelconque des revendications 1 à 9, **caractérisé en ce que** les saillies (8) sont amincies latéralement, de manière à présenter une section effilée permettant de faciliter leur insertion dans les crans (6).

## Patentansprüche

1. Kopfstütze (1) für einen Sitz eines Kraftfahrzeugs, wobei die Kopfstütze umfasst:
• zwei parallele metallische Montageschenkel (2) auf einer Rückenlehne des Sitzes,
• eine Querstrebe (3), die die oberen Teile (10) der Schenkel verbindet,
• ein Gehäuse (4) aus geformtem Kunststoffmaterial zur Absorption von Energie im Fall eines Aufpralls des Kopfes eines Insassen auf die Kopfstütze, wobei das Gehäuse um eine Querachse (15) derartig rotatorisch angebracht ist, dass es aus einer aufgerichteten Benutzungsposition in eine heruntergeklappte abgesenkte Position wechseln kann,
• ein Verkleidungskissen des Gehäuses,
• eine Verriegelungsvorrichtung des Gehäuses in aufgerichteter Position,
• ein erstes Federmittel (5) zur Betätigung des Gehäuses in seine heruntergeklappte Position, wenn die Vorrichtung deaktiviert ist,
wobei die Kopfstütze **dadurch gekennzeichnet ist, dass** die Vorrichtung umfasst:
• zwei Verriegelungsrasten (6), die jeweils im oberen Teil (10) jedes Schenkels ausgebildet sind,
• einen Verriegelungs-Querträger (7), der quer gleitend in dem Gehäuse derart angebracht ist, dass er aus einer Verriegelungsposition in eine Entriegelungsposition wechseln kann, wobei der Querträger mit zwei Verriegelungsvorsprüngen (8) ausgestattet ist, die jeweils in jede Raste einrasten, wenn der Querträger in Verriegelungsposition ist,
• ein Betätigungsmittel des Querträgers in seine Entriegelungsposition,
• ein zweites Federmittel (16) zur Betätigung des Querträgers in seine Verriegelungsposition, wenn das Gehäuse in aufgerichteter Position ist und wenn das Betätigungsmittel nicht aktiviert ist.

2. Kopfstütze nach Anspruch 1, **dadurch gekennzeichnet, dass** das Betätigungsmittel des Querträgers (7) in Form eines seitlichen Knopfs (9) vorliegt, der am Ende des Querträgers derart angeordnet ist, dass dessen Betätigung in seine Entriegelungsposition erlaubt ist.

3. Kopfstütze nach Anspruch 2, **dadurch gekennzeichnet, dass** der Knopf (9) durch Druck, ausgeübt von einem Finger eines Benutzers, betätigt wird.

4. Kopfstütze nach Anspruch 1, **dadurch gekennzeichnet, dass** das Betätigungsmittel des Querträgers (7) in Form einer Zylinderspule (17) vorliegt, wobei:
• die Zylinderspule in dem Gehäuse (4) angebracht ist,
• der Querträger auf der Basis eines durch einen Magnet anziehbaren Metalls ist,
• der Querträger derart angebracht ist, dass er das Innere der Zylinderspule durchquert und darin gleiten kann,
• die elektrischen Versorgungsklemmen der Zylinderspule derart definiert sind, dass der Querträger annimmt:
o seine Verriegelungsposition bei Abwesenheit einer Versorgung, unter der Wirkung des zweiten Federmittels (16),
o seine Entriegelungsposition bei Anwesenheit einer Versorgung, entgegen der Wirkung des zweiten Federmittels.

5. Kopfstütze nach einem der Ansprüche 1 bis 4, **dadurch gekennzeichnet, dass** die Schenkel (2) einen nach vorn gekrümmten oberen Teil (10) aufweisen.

6. Kopfstütze nach einem der Ansprüche 1 bis 5, **dadurch gekennzeichnet, dass** die Rasten (6) seitlich auf den Schenkeln (2) angeordnet sind, wobei die Vorsprünge (8) vertikal ausgerichtet sind.

7. Kopfstütze nach einem der Ansprüche 1 bis 6, **dadurch gekennzeichnet, dass** der Querträger (7) etwa in einer ebenen Platte verläuft, wobei der Querträger zwei seitliche quer verlaufende Langlöcher (11) umfasst, wobei die Löcher von zwei Stiften (12) zwecks Befestigung am Gehäuse (4) durchquert werden, wobei die Stifte an ihrem freien Ende mit einem Kragen (13) zum Halten des Querträgers versehen sind, wobei die Löcher derart eingerichtet sind, dass sie eine Querverlagerung des Querträgers zwischen seiner Verriegelungs- und Entriegelungsposition erlauben.

8. Kopfstütze nach einem der Ansprüche 1 bis 7, **dadurch gekennzeichnet, dass** das erste Federmittel (5) in Form einer Spiralfeder vorliegt, die um die Strebe (3) angebracht ist.

9. Kopfstütze nach einem der Ansprüche 1 bis 8, **dadurch gekennzeichnet, dass** die Rasten (6) eine seitliche Erweiterung aufweisen, so dass das Einsetzen der Vorsprünge (8) beim Versetzen des Querträgers (7) in Verriegelungsposition erleichtert wird.

10. Kopfstütze nach einem der Ansprüche 1 bis 9, **dadurch gekennzeichnet, dass** die Vorsprünge (8) seitlich verschlankt sind, so dass sie einen sich verengenden Querschnitt aufweisen, der ihr Einsetzen in die Rasten (6) erleichtert.

## Claims

1. Headrest (1) for a motor vehicle seat, said headrest comprising:
- two parallel metal legs (2) for mounting on a seatback of said seat,
- a transverse strut (3) connecting the upper portions (10) of said legs,
- a housing (4) made of moulded plastic material for the adsorption of energy in case of impact of the head of a passenger on said headrest, said housing being rotatably mounted about a transverse axis (15), in such a way as to be able to switch from a raised position of use to a retracted lowered position,
- an upholstered cushion of said housing,
- a device for locking said housing in the raised position,
- a first spring means (5) for actuating said housing to the lowered position thereof when said device is deactivated,
said headrest being **characterised in that** said device comprises:
- two locking catches (6) each formed in the upper portion (10) of each one of said legs,
- a locking crosspiece (7) mounted with transversal sliding in said housing, in such a way as to be able to switch from a locking position to an unlocked position, said crosspiece being provided with two locking projections (8) fitting respectively into each one of said catches when said crosspiece is in the locking position,
- a means for actuating said crosspiece to the unlocked position thereof,
- a second spring means (16) for actuating said crosspiece to the locking position thereof when said housing is in the raised position and when said actuation means is not activated.

2. Headrest according to claim 1, **characterised in that** the actuating means of the crosspiece (7) has the form of a lateral button (9) arranged at the end of said crosspiece in such a way as to allow for the actuating thereof to the unlocked position thereof.

3. Headrest according to claim 2, **characterised in that** the button (9) is actuating by the pressing exerted by a finger of the user.

4. Headrest according to claim 1, **characterised in that** the actuating means of the crosspiece (7) is in the form of a solenoid (17), knowing that:
- said solenoid is mounted in the housing (4),
- said crosspiece has a metal base that can be attracted by a magnet,
- said crosspiece is mounted so as to pass through the inside of said solenoid and to be able to slide therein,
- the electrical power supply terminals of said solenoid are defined in such a way that said crosspiece adopts:
-- the locking position thereof in the absence of a power supply under the effect of the second spring means (16),
-- the unlocked position thereof in the presence of a power supply, against said second spring means.

5. Headrest according to any of claims 1 to 4, **characterised in that** the legs (2) have an upper portion (10) that is curved towards the front.

6. Headrest according to any of claims 1 to 5, **characterised in that** the catches (6) are arranged laterally on the legs (2), with the projections (8) being orientated vertically.

7. Headrest according to any of claims 1 to 6, **characterised in that** the crosspiece (7) is substantially inscribed in a flat plane, said crosspiece comprising two transversally-elongated lateral holes (11), said holes being passed through by two rods (12) for fixing to the housing (4), said rods being provided at the free end thereof with a collar (13) for maintaining said crosspiece, said holes being arranged in such a way as to allow for a transversal clearance of said crosspiece between the locking and unlocked positions thereof.

8. Headrest according to any of claims 1 to 7, **characterised in that** the first spring means (5) is in the form of a helical spring mounted around the strut (3).

9. Headrest according to any of claims 1 to 8, **characterised in that** the catches (6) have a lateral enlargement in such a way as to facilitate the insertion of projections (8) during the setting of the crosspiece (7) to the locking position.

10. Headrest according to any of claims 1 to 9, **characterised in that** the projections (8) are laterally thinned, in such a way as to have a tapered section making it possible to facilitate the insertion thereof into the catches (6).
